# FASCICULE DE BREVET EUROPEEN

(11) **EP 0 735 822 B1**
(45) Date de publication et mention de la délivrance du brevet: **12.04.2000**
(21) Numéro de dépôt: 95905169.9
(22) Date de dépôt: 26.12.1994
(51) Int. Cl.: A01N 65/00, A01N 25/24, A01N 49/00

(54) **UTILISATION D'AU MOINS UN CARBURE TERPENIQUE ET/OU UN DE SES DERIVES EN TANT QU'ADJUVANT D'UNE BOUILLIE HERBICIDE OU COFORMULANT D'UNE COMPOSITION HERBICIDE**
VERWENDUNG VON MINDESTENS EINEM TERPEN UND/ODER SEINER DERIVATE ALS ZUSATZ ZU EINEM HERBIZIDBREI ODER COFORMULIERUNGSMITTEL EINER HERBIZIDKOMPOSITION
USE OF AT LEAST ONE TERPENIC CARBIDE AND/OR A DERIVATIVE THEREOF AS AN ADDITIVE TO A HERBICIDE SLURRY OR COFORMULANT OF A HERBICIDE COMPOSITION

(30) Priorité: 24.12.1993 FR 9315653
(43) Date de publication de la demande: 09.10.1996
(73) Titulaire: ACTION PIN, 40100 Dax (FR)
(72) Inventeur: LAULHE, Jean-Paul, F-40990 Saint-Paul-les-Dax (FR); DUFAU, Ghislain, F-40100 Dax (FR)
(74) Mandataire: Moncheny, Michel
(86) Numéro de dépôt international: FR9401533
(87) Numéro de publication internationale: WO9517822

(56) Documents cités:
- EP-A- 0 022 666
- EP-A- 0 027 344
- WO-A-80/02360
- WO-A-91/05472
- WO-A-93/19598
- DE-A- 3 247 050
- FR-A- 2 599 592
- GB-A- 2 134 391
- US-A- 4 822 407
- CHEMICAL ABSTRACTS, vol. 122, no. 3, 16 Janvier 1995 Columbus, Ohio, US; abstract no. 25843, K.KOWANSKI 'Possibility of reducing dosage of pesticides in potato protection' & MATER.SES.NAUK.INST.OCHR.ROSL., vol. 31,no. 2, 1991 - 1992 POZNAN, pages 66-70,
- PESTICIDE SCIENCE., vol. 37, BARKING GB, page 147 C.GAUVRIT ET AL. 'Oils for Weed Control: Uses and Mode of Action'
- H.MARTIN 'THE SCIENTIFIC PRINCIPLES OF PLANT PROTECTION WITH SPECIAL REFERENCE TO CHEMICAL CONTROL' 1944 , E.ARNOLD , LONDON, GB voir page 76, alinéa 3 voir page 80, alinéa 4 - page 81, alinéa 1
- CHEMICAL ABSTRACTS, vol. 116, no. 9, 2 Mars 1992 Columbus, Ohio, US; abstract no. 78605, & JP,A,03 086 802 (SANYO) 11 Avril 1991
- DATABASE WPI Week 9444 Derwent Publications Ltd., London, GB; AN 94-310851 [39] & CA,A,2 111 314 (APPLIED BIOCHEMISTS) , 18 Septembre 1994
- CHEMICAL ABSTRACTS, vol. 119, no. 7, 16 Août 1993 Columbus, Ohio, US; abstract no. 65585, S.F.VAUGHN 'Volatile monoterpenes as potential parent structures for new herbicides' & WEED SCI., vol. 41,no. 1, 1993 pages 114-119,

## Description

L'invention concerne l'utilisation d'une formulation à base d'au moins un carbure terpénique et/ou ses dérivés, notamment l'huile de pin et éventuellement d'un agent tensioactif en tant qu'adjuvant d'une composition ou d'une bouillie herbicide sélective.

On connaît déjà des compositions herbicides comprenant un dérivé terpénique.

Ainsi, US-A-4 822 407 concerne un diluant pour herbicide industriel appliqué sur des zones non agricoles pouvant comprendre de l'huile de pin ou des terpènes en tant qu'émulsifiant.

EP-A-0 022 666 décrit une composition comprenant un ingrédient actif, notamment un herbicide, un agent tensioactif et/ou un agent de revêtement qui peut être un terpène.

On connaît en outre des émulsions pesticides contenant des terpènes comme solvants et émulsifiants (Chemical Abstracts, vol. 116, n° 9, abs n° 78605 d).

FR 2 599 592 décrit une composition active contre le traitement des maladies cryptogamiques comprenant du soufre broyé et des alcools terpéniques.

WO-A-93 19598 décrit une composition comprenant un agent herbicide non toxique consistant de manière générale en un lipide et plus particulièrement une graisse animale, solubilisé dans un solvant approprié. L'huile de pin est citée à ce titre.

Sur les différentes espèces qu'ils cultivent, les agriculteurs utilisent des herbicides sélectifs de la culture pour détruire les mauvaises herbes en conservant la culture intacte. Ces herbicides sélectifs s'utilisent tôt, par exemple entre la levée et la montaison (au plus tard l'épiaison ou la floraison) des cultures annuelles, pour diminuer l'impact de la concurrence des mauvaises herbes sur le rendement. Dans ces conditions, leur sélectivité doit être parfaite. Ces produits ont une action foliaire, racinaire ou les deux à la fois.

On peut améliorer l'efficacité foliaire de ces produits par l'utilisation d'adjuvants ; souvent cette pratique a pour effet de diminuer la sélectivité de la bouillie.

On a découvert que l'utilisation d'au moins un carbure terpénique et/ou ses dérivés selon l'invention accroît dans des proportions importantes l'efficacité des herbicides tout en conservant une excellente sélectivité du mélange vis à vis de la culture; de plus la régularité d'action de l'herbicide est aussi améliorée.

L'invention a pour objet l'utilisation d'au moins un carbure terpénique et/ou ses dérivés en tant qu'adjuvant d'une bouillie herbicide sélective de surfaces cultivées ou en tant que coformulant d'une composition herbicide sélective de surfaces cultivées, pour le traitement de cultures entre la levée et l'épiaison ou la floraison.

En tant que coformulant les carbures terpéniques et/ou leurs dérivés peuvent être destinés par exemple à un industriel qui les incorporera comme coformulant lors de la fabrication de ladite composition herbicide, en même temps que la matière active et les différents ingrédients habituels d'une telle composition. Ils peuvent être destinés à un utilisateur final par exemple à un agriculteur auquel cas il sera de préférence formulé en association avec un agent tensioactif compatible pour former un adjuvant. Cet adjuvant sera destiné à être ajouté à une bouillie herbicide diluée.

Avantageusement, au cas où les carbures terpéniques et/ou leurs dérivés sont formulés conjointement à un tensioactif, la formulation compendra de 95 à 60% en poids de carbure terpénique ou dérivé de celui-ci et de 5 à 40% en poids d'un agent tensioactif, de préférence 20 à 30% en poids d'agent tensioactif.

Les dérivés terpéniques au sens de la présente invention sont de tous types de carbure terpénique ayant 2,3 ou 2 n unités isoprène par molécule, avec n allant de 2 à 8, et même au-delà. Il s'agit des mono-, sesqui-, di-, tri-, tétra-, et polyterpènes.

Les carbures terpéniques peuvent être acycliques, monocycliques ou bicycliques.

On peut citer notamment les exemples suivants :
- carbures terpéniques acycliques : myrcène, alloöcymène...
- carbures terpéniques monocycliques : dipentène, terpinolène, p-cymène...
- carbures terpéniques bicycliques : α-pinène, β-pinène, Δ-3-carène...

Par dérivés de carbures terpéniques on entend notamment les composés suivants :
a - dérivés oxydés : cinéols
b - les alcools terpéniques:bornéol, fenchol, menthanol, terpinéols...
c - les cétones : camphre, fenchone
d - les résines terpéniques dérivées par exemple de l' α-pinène et du β-pinène
e - les résines terpènes phénoliques...
f - les esters : acétate de terpényle ...

L'invention comprend également les mélanges de carbures et d'alcools terpéniques par exemple l'huile de pin d'origine naturelle ou de synthèse (obtenues par exemple par hydratation catalytique de l' α-pinène).

Les huiles de pin sont constituées par des mélanges d'alcools et de carbures terpéniques pouvant contenir au moins 50 % en poids d'alcools terpéniques, de préférence 80 à 90 % en poids.

L'agent tensioactif comprend tout agent apte à émulsifier le carbure terpénique et/ou un dérivé de celui-ci lorsqu'il est ajouté dans la bouillie herbicide.

Notamment, l'agent tensioactif peut comprendre un agent tensioactif anionique, par exemple un alkylsulfate de métal alcalin, notamment de sodium, par exemple un produit commercialisé sous la dénomination Melioran 118® par la société CECA, un agent tensioactif non ionique tel qu'un alkylphénol éthoxylé, un agent tensioactif cationique ou encore un mélange d'un ou plusieurs de ces agents, notamment un mélange d'un ou plusieurs agent(s) tensioactif(s) cationique(s) et d'un ou plusieurs agent(s) tensioactif(s) non ioniques ou d'un ou plusieurs agent(s) tensioactif(s) anionique(s) et d'un ou plusieurs agent(s) tensioactif(s) non ionique(s).

La nature de l'agent herbicide est différente. L'ensemble des herbicides sélectifs des cultures est concernée par l'invention, particulièrement ceux à action foliaire importante, quelle que soit la culture concernée (céréales, pois, colza, tournesol, maïs, betterave, pomme de terre ou autres ...). L'usage est spécialement intéressant en association avec les antigraminées des céréales ou bien avec les antidocotylidones des cultures dicotylidones. Parmi les familles d'agents herbicides on peut citer les aryloxyphénoxy-propionates, les phénoxy nicotinanilides, les benzonitriles, les carbamates, les dérivés du benzofuranne et les pyridyl-phényl-éthers.

Les agents herbicides ayant fourni des résultats particulièrement intéressants sont :
- le fénoxaprop-p-éthyle;
- le diflufénicanil, l'ioxynil, le bromoxynil et leurs mélanges;
- le phenmédiphame, l'éthofumésate, et leurs mélanges;
- le chodinafop-propargyl + chloquintocetmexyl (Celio ®, Ciba-Geigy).

Avantageusement, la formulation adjuvante décrite ci-dessus est utilisée à raison de 0,25 litre à 1 litre pour 100 litres de bouillie herbicide, correspondant à des doses de 0,25 à 4 litres/hectare, les doses de bouillies herbicides étant généralement de 100 à 400 litres/hectare.

Une activité surprenante a été observée lorsqu'au moins un carbure terpénique et/ou ses dérivés et éventuellement un agent tensioactif sont ajoutés extemporanément à la bouillie herbicide avant l'emploi.

Un exemple de formulation est à base d'huile de pin et d'un agent tensioactif et est le produit commercialisé par les Dérivés Résiniques et Terpéniques sous la dénomination Heliosol®.

L'invention a également pour objet une composition herbicide comprenant un agent herbicide associé aux ingrédients habituels des compositions herbicides et au moins un carbure terpénique et/ou ses dérivés, notamment huile de pin comme coformulant.

Habituellement, ladite composition herbicide comprend un agent herbicide associé aux ingrédients habituels des compositions herbicides et une formulation comprenant de 95 à 60 % en poids d'au moins un carbure terpénique et/ou ses dérivés et de 5 à 40 % en poids d'un agent tensio-actif.

Dans ce cas, le gain d'efficacité dû à l'ajout du coformulant permet de réduire la dose efficace de matière active dans une proportion pouvant atteindre 50 %.

L'invention a également pour objet une composition herbicide diluée prête à l'emploi comprenant, pour 100 litres de bouillie herbicide, de 0,25 à 1 litre d'une formulation comprenant de 95 à 60 % en poids d'au moins un carbure terpénique et/ou ses dérivés, de préférence une huile de pin et de 5 à 40 % en poids d'un agent tensioactif et un agent herbicide présent en une quantité comprise entre les doses habituelles et 50 % de la dose habituelle.

On donnera ci-après les résultats obtenus en utilisant Heliosol® en tant qu'adjuvant de bouillies herbicides différentes.

La diminution des coefficients de variation est la preuve de la régularité d'action observée en utilisant la formulation selon l'invention comme adjuvant d'une bouillie herbicide.

### EXEMPLE 1

Association de Heliosol® avec le fénoxaprop-p-éthyle. Désherbage de post-levée du blé. Volume de bouillie 200 l/ha. Essais sur graminées : vulpins et/ou folle avoine (France 1993, Vienne).

| | Fénoxaprop-p-éthyle (g/ha) | Heliosol® (l/ha) | Efficacité (%) | Coefficient de variation |
|---|---|---|---|---|
| ESSAI 1 | 82,8 | / | 95,0 | 9,1 |
| ESSAI 2 | 82,8 | 0,5 | 97,3 | 6,3 |
| ESSAI 3 | 82,8 | 1 | 100,0 | 1,7 |
| ESSAI 4 | 55,2 | 1 | 99,1 | 2,2 |
| ESSAI 5 | 41,4 | 1 | 98,8 | 2,8 |

### EXEMPLE 2

Même association que celle décrite précédemment. Désherbage de post-levée du blé. Volume de bouillie: 230 l/ha. Essais sur graminées (France 1993, Somme).

| | Fénoxaprop-p-éthyl (g/ha) | Heliosol® (l/ha) | Efficacité (%) |
|---|---|---|---|
| ESSAI 1 | 82,8 | / | 99,3 |
| ESSAI 2 | 82,8 | 1,17 | 100,0 |
| ESSAI 3 | 55,2 | 1,17 | 99,8 |

### EXEMPLE 3

Association de Heliosol® avec une spécialité contenant un mélange de diflufénicanil (40 g/l) + ioxynil (75 g/l) + bromoxynil (125 g/l). Désherbage de post-levée du blé. Volume de bouillie : 200 l/ha. Essais sur dicotylédones (France 1993, Vienne).

| **A. Essais sur pensées** | | | | | | |
|---|---|---|---|---|---|---|
| | Diflufénicanil g/ha | Ioxynil g/ha | Bromoxynil g/ha | Heliosol® l/ha | Efficacité (%) | Coefficient de varia tion |
| ESSAI 1 | 80 | 150 | 250 | / | 85 | 21 |
| ESSAI 2 | 80 | 150 | 250 | 1 | 100 | 0 |
| ESSAI 3 | 80 | 150 | 250 | 2 | 100 | 0 |
| ESSAI 4 | 60 | 112,5 | 187,5 | 1 | 100 | 0 |
| ESSAI 5 | 40 | 75 | 125 | 1 | 89 | 13 |

| **B. Essais sur coquelicots** | | | | | | |
|---|---|---|---|---|---|---|
| | Diflufénicanil g/ha | Ioxynil g/ha | Bromoxynil g/ha | Heliosol® l/ha | Efficacité (%) | Coefficient de varia tion |
| ESSAI 1 | 80 | 150 | 250 | / | 21 | 176 |
| ESSAI 2 | 80 | 150 | 250 | 0,5 | 100 | 0 |
| ESSAI 3 | 80 | 150 | 250 | 1 | 100 | 0 |
| ESSAI 4 | 80 | 150 | 250 | 2 | 100 | 0 |
| ESSAI 5 | 60 | 112,5 | 187,5 | 1 | 100 | 0 |
| ESSAI 6 | 40 | 75 | 125 | 1 | 49 | 28 |

| **C. Essais sur véroniques (feuilles de lierre)** | | | | | | |
|---|---|---|---|---|---|---|
| | Diflufénicanil g/ha | Ioxynil g/ha | Bromoxynil g/ha | Heliosol® l/ha | Efficacité (%) | Coefficient de varia tion |
| ESSAI 1 | 80 | 150 | 250 | / | 41 | 105 |
| ESSAI 2 | 80 | 150 | 250 | 1 | 58 | 74 |
| ESSAI 3 | 80 | 150 | 250 | 2 | 100 | 0 |
| ESSAI 4 | 60 | 112,5 | 187,5 | 1 | 63 | 41 |
| ESSAI 5 | 40 | 75 | 125 | 1 | 50 | 100 |

Dans les 3 exemples précédents, on a pu vérifier l'intérêt d'associer 1 l/ha (0,5 l/hl) de Heliosol® à des doses réduites d'herbicides. Dans tous les cas, Heliosol® apparaît comme étant sélectif de la culture du blé.

### EXEMPLE 4

Association de Heliosol® avec une spécialité contenant un mélange de phenmédiphame (97 g/l) + éthofumésate (94 g/l). Désherbage de post-levée des betteraves sucrières. Volume de bouillie 300 l/ha (France 1990, Marne).

| | ESSAI 1 | ESSAI 2 |
|---|---|---|
| Phenmédiphame (l/ha) | 485 | 485 |
| Ethofumésate (l/ha) | 470 | 470 |
| Heliosol® (l/ha) | / | 1 |

| Efficacités (E1/E2)* (%/%) | | |
|---|---|---|
| Mouron rouge | 91,67/89,66 | 100/100 |
| Chénopode blanc | 88,89/87,5 | 99,44/87,5 |
| Mouron des oiseaux | 73,33/85,71 | 86,67/100 |
| Liseron des champs | 60,69/40,63 | 95,38/93,75 |

| | | |
|---|---|---|
| * E1 : Efficacité 2 à 3 semaines après traitement E2 : Efficacité 47 jours après traitement | | |

### EXEMPLE 5

Même association que celle décrite précédemment. Désherbage de post-levée des betteraves sucrières. Volume de bouillie : 300 l/ha (France 1990, Marne).

| | ESSAI 1 | ESSAI 2 |
|---|---|---|
| Phenmédiphame (l/ha) | 485 | 485 |
| Ethofumésate (l/ha) | 470 | 470 |
| Heliosol® (l/ha) | / | 1 |

| Efficacités (E1/E2)* (%/%) | | |
|---|---|---|
| Colza (repousses) | 3,57/13,51 | 28,57/24,32 |
| Renouée liseron | 64,28/61,53 | 71,43/69,23 |
| Coquelicot | 69,59/73,53 | 86,96/85,29 |

| | | |
|---|---|---|
| * E1 : Efficacité 2 à 3 semaines après traitement E2 : Efficacité 47 jours après traitement | | |

### EXEMPLE 6

Même association que celle décrite précédemment. Désherbage de post-levée des betteraves sucrières. Volume de bouillie : 350 l/ha (France 1990, Seine et Marne).

| | ESSAI 1 | ESSAI 2 |
|---|---|---|
| Phenmédiphame (l/ha) | 485 | 485 |
| Ethofumésate (l/ha) | 470 | 470 |
| Heliosol® (l/ha) | / | 1 |

| Efficacités (E1/E2)* (%/%) | | |
|---|---|---|
| Matricaire chamomille | 0/5,1 | 19,0/36,4 |
| Fumeterre officinale | 84/58 | 88/75 |
| Renouée persicaire | 70,6/7,1 | 82,4/71,4 |
| Chenopode blanc | 100/70,8 | 96,9/100 |
| Panic pied de coq | 8,3/9,1 | 50/27,3 |

| | | |
|---|---|---|
| * E1 : Efficacité 15 jours après traitement E2 : Efficacité 30 jours après traitement | | |

Dans les exemples 4/5 et 6, Heliosol® apparaît comme étant sélectif de la culture de la betterave sucrière.

### EXEMPLE 7

### Association HELIOSOL + CELIO.

Traitement réalisés à la sortie de l'hiver en post-levée sur des cultures de blé tendre (variété soissons) infestées de vulpin.

Les doses appliquées étaient les suivantes en g/ha ou l/ha :
CELIO : 0,4 - 0,3 - 0,2
CELIO + HELIOSOL : 0,4 + 0,75 - 0,3 + 0,75 - 0,2 + 0,75.

L'étude a été réalisée sur trois parcelles de 20 m² avec des parcelles témoins adjacentes.

A toutes les doses (CELIO seul ou CELIO + HELIOSOL), on n'a aobservé aucun symptôme usuel sur la culture de blé, ce qui témoigne d'une sélectivité excellente.

En ce qui concerne l'efficacité, on a obtenu les résultats suivants.

Le CELIO appliqué seul a présenté une efficacité sur vulpin tout juste acceptable à la dose de 0,4 l/ha dans les quatre essais mis en place. L'efficacité chute et devient insuffisante dès la dose de 0,3 l/ha.

Le CELIO appliqué avec 0,75 l/ha d'HELIOSOL a présenté des efficacités nettement renforcées. On observe que l'efficacité du mélange CELIO + HELIOSOL appliqué aux doses respectives de 0,2 + 0,75 l/ha permet d'obtenir une efficacité sur vulpin supérieure à l'efficacité obtenue avec le CELIO appliqué seul à 0,4 l/ha.

## Revendications

1. Utilisation dans une bouillie ou une composition herbicide sélective de culture(s) comprenant un agent herbicide sélectif et s'utilisant entre la levée et la floraison de la ou des culture(s), d'au moins un alcool terpénique, pour accroître l'efficacité de ladite bouillie ou composition herbicide, sans nuire à sa sélectivité.

2. Utilisation selon la revendication 1, dans laquelle l'alcool est incorporé comme coformulant lors de la préparation d'une composition herbicide.

3. Utilisation selon la revendication 1, dans laquelle l'alcool est formulé en association avec un agent tensioactif pour former un adjuvant pour une bouillie herbicide.

4. Utilisation selon l'une quelconque des revendications précédentes, d'un mélange de carbures terpéniques et d'alcools terpéniques.

5. Utilisation selon la revendication 4, d'une huile de pin.

6. Utilisation selon la revendication 4 ou 5, d'un mélange d'alcools et de carbures terpéniques contenant au moins 50 % en poids d'alcools terpéniques.

7. Utilisation selon la revendication 4 ou 5, d'un mélange d'alcools et de carbures terpéniques contenant jusqu'à 80 à 90 % en poids d'alcools terpéniques.

8. Utilisation selon l'une quelconque des revendications 3 à 7, d'une formulation comprenant de 95 à 60 % en poids d'au moins un dérivé terpénique et de 5 à 40 % en poids d'un agent tensioactif, en tant qu'adjuvant d'une bouillie herbicide.

9. Utilisation selon la revendication 8, caractérisée en ce que la formulation comprend de 20 à 30 % en poids d'agent tensioactif.

10. Utilisation selon l'une quelconque des revendications 3, 8 et 9, caractérisée en ce que l'agent tensioactif est un alkylsulfate de métal alcalin, notamment de sodium.

11. Utilisation selon l'une quelconque des revendications précédentes, caractérisée en ce que l'agent herbicide est choisi parmi les agents herbicides du type des aryloxyphénoxy-propionates, des phénoxynicotinanilides, les benzonitriles, les carbamates, les dérivés du benzofuranne, et les pyridyl-phényl-éthers.

12. Utilisation selon la revendication 11, caractérisée en ce que l'agent herbicide est choisi parmi :
i) le phénoxaprop-p-éthyl,
ii) le diflufénicanil, l'ioxynil, le bromoxynil et leurs mélanges,
iii) le phenmédiphame, l'éthofumésate et leurs mélanges, et
iv) le clodinafop-propargyl + chloquintocetmexyl.

13. Utilisation selon l'une des revendications 1 à 12, caractérisée en ce que le dérivé terpénique et éventuellement un agent tensioactif associé est présent à raison de 0,25 à 1 l/100 l de bouillie herbicide.

14. Utilisation selon l'une des revendications 3 à 13, caractérisée en ce que la formulation est mélangée à la bouillie herbicide extemporanément avant emploi.

15. Utilisation selon la revendication 3, dans laquelle ladite formulation est Heliosol®.

16. Bouillie herbicide sélective diluée comprenant, au moins pour 100 litres de bouillie herbicide, un agent herbicide sélectif, et de 0,25 à 1 litre d'une formulation comprenant de 95 % à 60 % en poids d'une huile de pin et de 5 à 40 % en poids d'un agent tensioactif.

## Claims

1. Use, in a herbicidal mixture or composition selective for a crop or crops comprising a selective herbicidal agent and used between the emergence and the flowering of the crop(s), of at least one terpenic alcohol, in order to increase the efficacy of the said herbicidal mixture or composition, without hampering its selectivity.

2. Use according to Claim 1, in which the alcohol is incorporated as coformulant during the preparation of a herbicidal composition.

3. Use according to Claim 1, in which the alcohol is formulated in combination with a surfactant in order to form an adjuvant for a herbicidal mixture.

4. Use according to any one of the preceding claims, of a mixture of terpenic hydrocarbons and of terpenic alcohols.

5. Use according to Claim 4, of a pine oil.

6. Use according to Claim 4 or 5, of a mixture of terpenic hydrocarbons and alcohols containing at least 50% by weight of terpenic alcohols.

7. Use according to Claim 4 or 5, of a mixture of terpenic hydrocarbons and alcohols containing up to 80 to 90% by weight of terpenic alcohols.

8. Use according to any one of Claims 3 to 7, of a formulation comprising from 95 to 60% by weight of at least one terpenic derivative and from 5 to 40% by weight of a surfactant, as adjuvant for a herbicidal mixture.

9. Use according to Claim 8, characterized in that the formulation comprises from 20 to 30% by weight of surfactant.

10. Use according to any one of Claims 3, 8 and 9, characterized in that the surfactant is an alkali metal, in particular sodium, alkyl sulphate.

11. Use according to any one of the preceding claims, characterized in that the herbicidal agent is chosen from the herbicidal agents of the type comprising the aryloxyphenoxy propionates, phenoxynicotinanilides, benzonitriles, carbamates, benzofuran derivatives and pyridyl phenyl ethers.

12. Use according to Claim 11, characterized in that the herbicidal agent is chosen from:
i) phenoxaprop-p-ethyl,
ii) diflufenicanil, ioxynil, bromoxynil and mixtures thereof,
iii) phenmedipham, ethofumesate and mixtures thereof, and
iv) clodinafop-propargyl + chloquintocetmexyl.

13. Use according to one of Claims 1 to 12, characterized in that the terpenic derivative and optionally an associated surfactant is present in an amount of 0.25 to 1 l/100 l of herbicidal mixture.

14. Use according to one of Claims 3 to 13, characterized in that the formulation is mixed with the herbicidal mixture immediately before use.

15. Use according to Claim 3, in which the said formulation is Heliosol®.

16. Dilute selective herbicidal mixture comprising, at least per 100 litres of herbicidal mixture, a selective herbicidal agent, and from 0.25 to 1 litre of a formulation comprising from 95% to 60% by weight of a pine oil and from 5 to 40% by weight of a surfactant.

## Patentansprüche

1. Verwendung mindestens eines terpenischen Alkohols in einer kulturselektierenden herbiziden Brühe oder Mischung, welche einen zwischen dem Aufgehen und der Blüte der Kultur(en) einzusetzenden selektierenden herbiziden Wirkstoff aufweist, um die Wirksamkeit der hebiziden Brühe oder Mischung zu steigern, ohne deren Selektivität zu beeinträchtigen.

2. Verwendung nach Anspruch 1, bei der Alkohol als Rezepturbestandteil bei der Zubereitung einer herbiziden Mischung mit einbezogen wird.

3. Verwendung nach Anspruch 1, bei der Alkohol in Verbindung mit einem spannungsaktiven Wirkstoff in die Rezeptur aufgenommen wird, um einen Zusatzstoff für eine herbizide Brühe zu bilden.

4. Verwendung einer Mischung aus terpenischen Karbiden und terpenischen Alkoholen nach einem der vorangehenden Ansprüche.

5. Verwendung eines Kienöls nach Anspruch 4.

6. Verwendung einer Mischung aus terpenischen Alkoholen und Karbiden nach Anspruch 4 oder 5, mit mindestens 50 % Gewichtsanteil terpenischer Alkohole.

7. Verwendung einer Mischung aus terpenischen Alkoholen und Karbiden nach Anspruch 4 oder 5, mit bis zu 80 - 90 % Gewichtsanteil terpenischer Alkohole.

8. Verwendung einer Rezeptur nach einem der Ansprüche 3 bis 7, mit 95 bis 60 % Gewichtsanteil mindestens eines terpenischen Derivats und 5 bis 40 % Gewichtsanteil eines spannungsaktiven Wirkstoffs als Zusatzstoff einer herbiziden Brühe.

9. Verwendung nach Anspruch 8, dadurch gekennzeichnet, daß die Rezeptur 20 bis 30 % Gewichtsanteil eines spannungsaktiven Wirkstoffs enthält.

10. Verwendung nach einem der Ansprüche 3, 8 und 9, dadurch gekennzeichnet, daß der spannungsaktive Wirkstoff ein alkalisches Metallalkylsulfat, insbesondere Natrium, ist.

11. Verwendung nach einem der vorangehenden Ansprüche, dadurch gekennzeichnet, daß der herbizide Wirkstoff unter herbiziden Wirkstoffen vom Typ Aryloxyphenoxypropionat, Phenoxynikotinanilid, Benzonitril, Karbamat, Benzofuranderivat und Pyridyl-Phenyl-Ether ausgewählt wird.

12. Verwendung nach Anspruch 11, dadurch gekennzeichnet, daß der herbizide Wirkstoff unter:
i) Phenoxaprop-p-Ethyl
ii) Diflufenicanil, Ioxynil, Bromoxynil und deren Mischungen
iii) Phenmediphame, Ethofumesat und deren Mischungen, und
iv) Clodinafop-Propargyl + Chloquintocetmexyl ausgewählt wird.

13. Verwendung nach einem der Ansprüche 1 bis 12, dadurch gekennzeichnet, daß das terpenische Derivat und ggf. ein assoziierter spannungsaktiver Wirkstoff im Verhältnis von 0,25 bis 1 1/100 l herbizider Brühe vorhanden sind.

14. Verwendung nach einem der Ansprüche 3 bis 13, dadurch gekennzeichnet, daß die Rezeptur der herbiziden Brühe unmittelbar vor dem Einsatz beigemischt wird.

15. Verwendung nach Anspruch 3, wobei die Rezeptur Heliosol^{R} ist.

16. Verdünnte selektive herbizide Brühe, welche auf 100 Liter herbizide Brühe mindestens einen selektiven herbiziden Wirkstoff und 0,25 bis 1 Liter einer Rezeptur mit 95 bis 60 % Gewichtsanteil Kienöl und 5 bis 40 % Gewichtsanteil eines spannungsaktiven Wirkstoffs aufweist.
